# EUROPEAN PATENT APPLICATION

(11) **EP 3 684 033 A1**
(43) Date of publication of application: **22.07.2020**
(21) Application number: 20151318.1
(22) Date of filing: 10.01.2020
(51) Int. Cl.: H04L 29/08, B60R 16/023

(54) **SYSTEMS AND METHODS FOR COLLECTING, MONITORING, AND ANALYZING VEHICLE DATA FROM A PLURALITY OF VEHICLES USING EDGE COMPUTING**

(30) Priority: 17.01.2019 US 201916250027
(71) Applicant: Honeywell International Inc., Morris Plains, NJ 07950 (US)
(72) Inventor: RAJENDRAN, Satish Kumar, Morris Plains, NJ New Jersey 07950 (US); RAO, Karthik, Morris Plains, NJ New Jersey 07950 (US); DEEKSHITH, Chethan, Morris Plains, NJ New Jersey 07950 (US); SENATHIPATHY, Vishnu, Morris Plains, NJ New Jersey 07950 (US)
(74) Representative: Haseltine Lake Kempner LLP

(57) **Abstract**

Systems and methods for collecting, monitoring, and analyzing vehicle data from a plurality of vehicles using edge computing are disclosed. The method may include: generating a plurality of edge computing microservices modules, each edge computing microservices module being generated based on different vehicle system details of the plurality of vehicles; installing a respective edge computing microservices module onto a vehicle data gateway of a respective vehicle based on the vehicle system details of the respective vehicle, each edge computing microservices module is configured to perform vehicle data computation of vehicle data received at the vehicle data gateway to generate computed vehicle data; receiving the computed vehicle data from the vehicle data gateway of each of the plurality of vehicles; storing the received computed vehicle data in one or more databases; and transmitting select computed vehicle data to an end user via a web platform.

## Description

### TECHNICAL FIELD

Various embodiments of the present disclosure generally relate to vehicle data collection and analytics and, more particularly, to systems and methods for collecting, monitoring, and analyzing vehicle data from a plurality of vehicles using edge computing.

### BACKGROUND

In today's aerospace industry, aircraft may be connected to a variety of services provided by service providers through a network. To provide the variety of services, the service providers may collect aircraft data from each connected aircraft. One such service may be provided for collecting, monitoring, and analyzing aircraft data of each connected aircraft. In this emerging connected aircraft industry, each aircraft may continuously produce a large amount of data before, during, and after each flight. Further, the connected aircraft may need to exchange important messages with a ground data center via the network (e.g., via SATCOM, LTE, and/or Wi-Fi channels) for monitoring and controlling each aircraft by the aeronautical operational control (AOC) and/or the air traffic controller (ATC).

However, the ground data center may have limited bandwidth for receiving the large amount of aircraft data and messages from each of the connected aircraft. As a result, this may cause various problems in network allocation, data congestion, latency, data privacy and security, data management costs, and disaster recovery. The current connected aircraft services are centralized systems in which the raw vehicle data is sent to the ground data center, which may take significant time for formatting and analyzing the raw vehicle data to provide monitoring and analyzes services.

The present disclosure is directed to overcoming one or more of these above-referenced challenges.

### SUMMARY OF THE DISCLOSURE

According to certain aspects of the disclosure, systems and methods are disclosed for collecting, monitoring, and analyzing vehicle data from a plurality of vehicles using edge computing.

In one aspect, a computer-implemented method for collecting, monitoring, and analyzing vehicle data from a plurality of vehicles using edge computing is disclosed. The method may include: generating a plurality of edge computing microservices modules, each edge computing microservices module being generated based on different vehicle system details for each of the plurality of vehicles; installing a respective edge computing microservices module onto a vehicle data gateway of a respective vehicle based on the vehicle system details of the respective vehicle, wherein each edge computing microservices module is configured to perform vehicle data computation of vehicle data received at the vehicle data gateway of each of the plurality of vehicles to generate computed vehicle data; receiving the computed vehicle data from the vehicle data gateway of each of the plurality of vehicles; storing the received computed vehicle data in one or more databases; and transmitting select computed vehicle data from the one or more databases to an end user via a web platform.

In another aspect, a computer system for collecting, monitoring, and analyzing vehicle data from a plurality of vehicles using edge computing is disclosed. The system may include: a memory having processor-readable instructions stored therein; and at least one processor configured to access the memory and execute the processor-readable instructions, which when executed by the processor configures the processor to perform a plurality of functions, including functions for: generating a plurality of edge computing microservices modules, each edge computing microservices module being generated based on different vehicle system details for each of the plurality of vehicles; installing a respective edge computing microservices module onto a vehicle data gateway of a respective vehicle based on the vehicle system details of the respective vehicle, wherein each edge computing microservices module is configured to perform vehicle data computation of vehicle data received at the vehicle data gateway of each of the plurality of vehicles to generate computed vehicle data; receiving the computed vehicle data from the vehicle data gateway of each of the plurality of vehicles; storing the received computed vehicle data in one or more databases; and transmitting select computed vehicle data from the one or more databases to an end user via a web platform.

In yet another aspect, a non-transitory computer-readable medium containing instructions for collecting, monitoring, and analyzing vehicle data from a plurality of vehicles using edge computing is disclosed. The non-transitory computer-readable medium may contain instructions including: generating a plurality of edge computing microservices modules, each edge computing microservices module being generated based on different vehicle system details for each of the plurality of vehicles; installing a respective edge computing microservices module onto a vehicle data gateway of a respective vehicle based on the vehicle system details of the respective vehicle, wherein each edge computing microservices module is configured to perform vehicle data computation of vehicle data received at the vehicle data gateway of each of the plurality of vehicles to generate computed vehicle data; receiving the computed vehicle data from the vehicle data gateway of each of the plurality of vehicles; storing the received computed vehicle data in one or more databases; and transmitting select computed vehicle data from the one or more databases to an end user via a web platform.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary environment of a system for collecting, monitoring, and analyzing vehicle data from a plurality of vehicles using edge computing, according to aspects of the disclosure.
FIG. 2 depicts a block diagram of the exemplary system for collecting, monitoring, and analyzing vehicle data from a plurality of vehicles using edge computing, according to aspects of the disclosure.
FIG. 3 depicts a block diagram of an exemplary microservices builder module of the system of FIG. 2.
FIG. 4 depicts a flowchart of a method for collecting, monitoring, and analyzing vehicle data from a plurality of vehicles using edge computing, according to aspects of the disclosure.
FIG. 5 depicts an example system that may execute techniques presented herein.

### DETAILED DESCRIPTION

The following embodiments describe systems and methods for collecting, monitoring, and analyzing vehicle data from a plurality of vehicles using edge computing. As described above, collecting, monitoring, and analyzing raw vehicle data may require large amounts of bandwidth, as well as various problems in network allocation, data congestion, latency, data privacy and security, data management costs, and disaster recovery. Embodiments of the present disclosure provide solutions to these problems by providing edge computing microservices at the vehicle data gateway (e.g., an aircraft data gateway). As such, critical data computation or storage is migrated at the vehicle data gateway network edge. For example, an aircraft data gateway having an exemplary edge computing microservices module of the present disclosure may be capable of interfacing with an aircraft data acquisition system to pull flight recorded data in real time to perform storage and edge computing before transmitting the flight recorded data to the cloud for aircraft data monitoring and analytics.

In some embodiments of the present disclosure, a microservices builder module may reside at remote computing systems, i.e., in "the cloud." The microservices builder module may contain a large database of all aircraft system details based on the different types of aircraft. The microservices builder module may use the aircraft system details to train and build the model to understand the data generated by each avionics computer. The trained modules may be executed as microservices modules. Upon configuration, the microservices modules may be selected and loaded into a respective aircraft data gateway for installation. When installed, the microservices modules may service raw aircraft data stored in the aircraft data gateway. The post-edge computed aircraft data of each aircraft may then be transferred to the cloud for big data analytics. The ground data center may receive, via the cloud, the post-edge computed aircraft data from aircraft data gateways of multiple aircraft to perform the real time telematics and analytics operation for a plurality of aircraft.

In some embodiments, web and mobile application services may be provided to probe the analytics data for enhanced visualization and alerting. The web and mobile application services may be deployed using Beats Elasticsearch Logstash and Kibana (BELK). BELK may be utilized to take data from any source (and in any format), process, transform and enrich it, store it, and allow users to search, analyze, and visualize the data in real time through the web and mobile application services.

The disclosed embodiments may have a number of technical advantages. First, the microservices modules may allow the aircraft data gateway to act as an edge device for edge data computation of the aircraft data. This may offload the computational stress performed by current centralized ground data centers and may significantly reduce the data message exchange latency. Second, distributing the data computation between the ground data center and the aircraft data gateway edge may balance network traffic and allocate bandwidth to critical operations. Third, the microservices modules installed at the edge of the system (e.g., on the aircraft data gateway) may allow improved data transfer and computation speed while avoiding data congestion.

The disclosed embodiments may further have a number of business advantages. First, the disclosed systems and methods may reduce operational cost, allow for fewer maintenance delays, and may increase overall aircraft performance. Second, the disclosed systems and methods may provide for secured access to AOC for accessing various flight resources in real time such as engine data, APU data, FMS data, FDR data, weather data, etc. Third, the disclosed systems and methods may transform flight critical data to easy-to-read information for customers to allow customers to operate effectively by saving time and effort. Fourth, the disclosed systems and methods may lower the overall cost associated with data management and operations.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

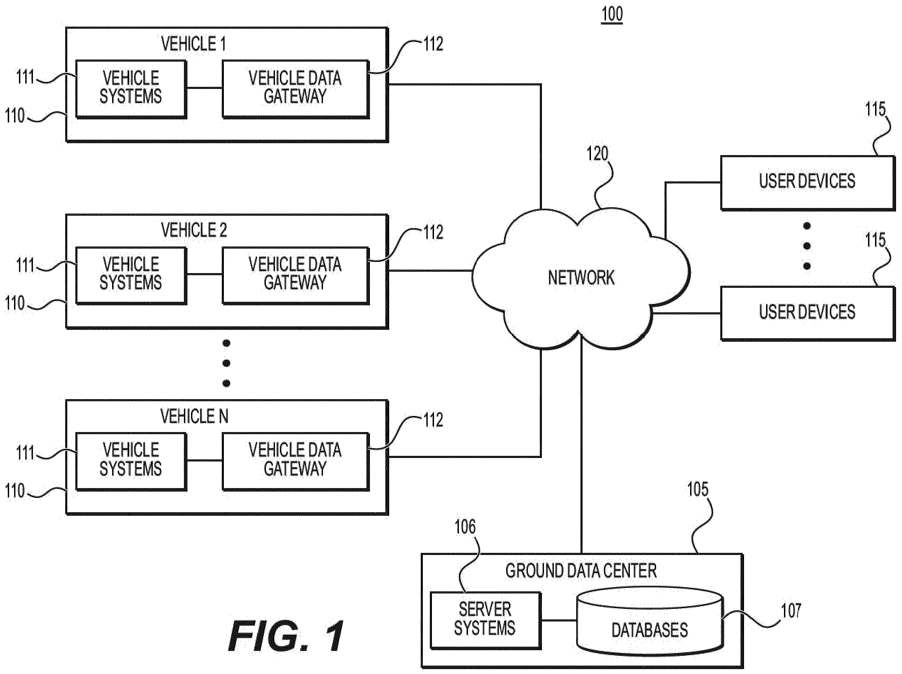

Referring now to the appended drawings, FIG. 1 depicts an exemplary environment of a system 100 for collecting, monitoring, and analyzing vehicle data from a plurality of vehicles using edge computing, according to aspects of the disclosure. As shown in FIG. 1, system 100 may include a ground data center 105, a plurality of vehicles 110, and user devices 115. The ground data center 105, each of the plurality of vehicles 110, and each user device 115 may all be connected to a network 120 (e.g., a cloud network).

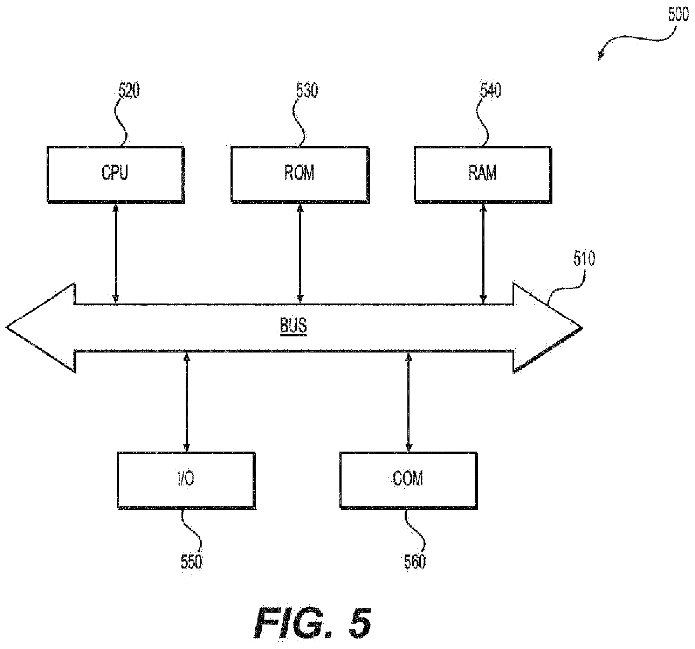

The ground data center 105 may include one or more server systems 106 and one or more databases 107. The server systems 106 may include computing systems, such as system 500 described with respect to FIG. 5. As such, the server systems 106 may each include one or more processors and a memory for storing and executing applications or software modules of system 100. For example, server systems 106 may include one or more software modules to communicate with each of the plurality of vehicles 110 and with the user devices 115 through network 120. Further, the one or more processors may be configured to access the memory and execute processor-readable instructions, which when executed by the processor configures the processor to perform a plurality of functions of the system 100 for collecting, monitoring, and analyzing vehicle data from a plurality of vehicles using edge computing. The server systems 106 may also store and execute a web platform for monitoring and analyzing vehicle data of the plurality of vehicles 110, which may be accessed by end users through network 120. The web platform may be implemented through one or more sever systems 106, such as an application program interface (API) server, web pages servers, image servers, processing servers, search servers, or any other type of front-end or back-end servers for implementing the web platform.

Each of the plurality of vehicles 110 may include vehicle systems 111 and a vehicle data gateway 112. In one embodiment, the plurality of vehicles 110 may include aircraft. In other embodiments, the plurality of vehicles 110 may include another type of vehicle, such as automobiles, trains, boats/ships, spacecraft, etc. The vehicle systems 111 of each of the plurality of vehicles 110 may generate and/or collect vehicle data for a respective vehicle and transmit the generated and/or collected vehicle data to the vehicle data gateway 112. The vehicle data gateway 112 may collect and store the vehicle data. The vehicle data gateway 112 of each of the plurality of vehicles 110 may further be in communication, through network 120, with the server systems 106 of ground data center 105 for transmitting the vehicle data to the ground data center 105. Ground data center 105 may store the vehicle data in the one or more databases 107. The server systems 106 of ground data center 105 may process, monitor, and analyze the vehicle data and transmit the processed, monitored, and analyzed vehicle data to end users via the web platform, as further detailed below.

End users may access the web platform through the network 120 by user devices 115. User devices 115 may allow an end user to display a web browser for accessing the web platform from the server systems 106 through the network 120. The user devices 115 may be any type of device for accessing Web pages, such as personal computing devices, mobile computing device, or the like. User devices 115 may include a computing system or device, such as system 500 described with respect to FIG. 5. As such, user devices 115 may include one or more processors and a memory for downloading, installing, and running applications, such as an application for accessing the web platform.

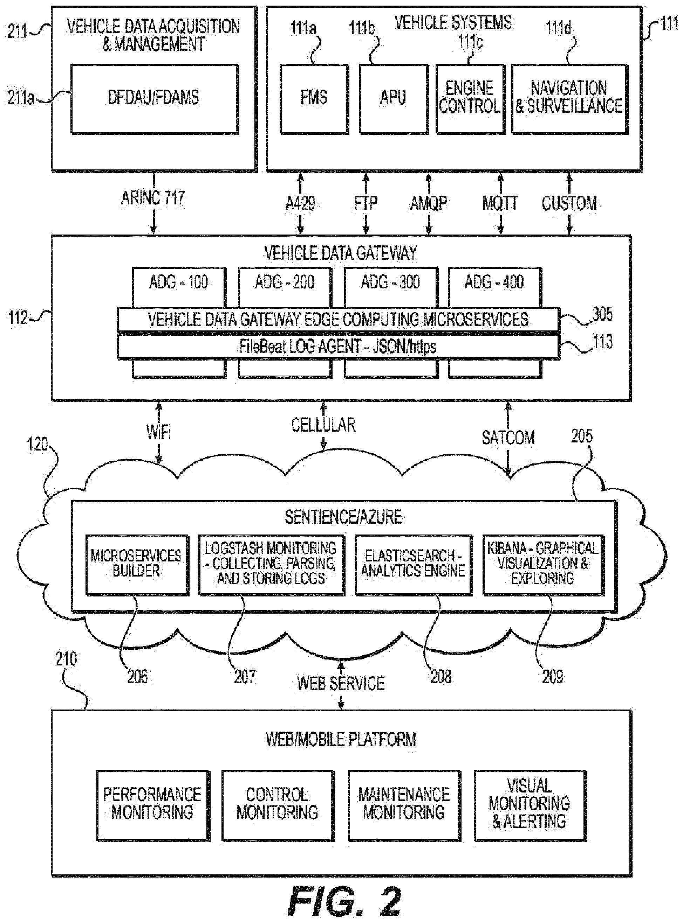

FIG. 2 depicts a block diagram of a system for collecting, monitoring, and analyzing vehicle data from a plurality of vehicles 110 using edge computing. As shown in FIG. 2, the vehicle systems 111 of each of the plurality of vehicles 110 may include, for example, a flight management system (FMS) 111a, an auxiliary power unit (APU) system 111b, engine control systems 111c, and navigation & surveillance systems 111d, or any other vehicle system for generating or collecting vehicle data for a respective vehicle 110. The vehicle systems 111 may further include a vehicle data acquisition and management unit 211. For example, the vehicle data acquisition & management unit 211 may include a flight data acquisition management system (FDAMS) 211a having a digital flight data acquisition unit (DFDAU). FDAMS 211a may allow for digital and analog vehicle data acquisition and storage. The vehicle systems 111 may each be in communication with the vehicle data gateway 112 of a respective vehicle 110 by one or more communication protocols. The one or more communication protocols may include ARINC (e.g., ARINC 717, ARINC 429, etc.), file transfer protocol (FTP), advanced message queuing protocol (AMQP), message queuing telemetry transport (MQTT), or a custom communication protocol.

In one embodiment, the vehicle data gateway 112 of each of the plurality of vehicles 110 may be an aircraft data gateway, such as an ADG-100, ADG-200, ADG-300, or ADG-400. Each vehicle 110 and/or the vehicle data gateway 112 of each vehicle 110 may also include wireless communication transceivers. The wireless communication transceivers may allow each vehicle 110 and/or the vehicle data gateway 112 of each vehicle 110 to wirelessly communicate with the ground data center 105 through network 120 for sending vehicle data to ground data center 105. The wireless communication transceivers may allow each vehicle 110 and/or the vehicle data gateway 112 to communicate with the network 120 through, for example, Wi-Fi, cellular, and/or SATCOM. The vehicle data gateway 112 may further include vehicle data gateway edge computing microservices 305 and a log agent 113 for creating and sending log data to ground data center 105, as further detailed below.

Server systems 106 of ground data center 105 may implement various cloud computing modules via network 120 for collecting, monitoring, and analyzing vehicle data of the plurality of vehicles 110 using edge computing. The cloud computing modules may be provided by an internet of things (IoT) platform 205, such as the Sentience platform. The cloud computing modules may include, for example, a microservices builder module 206, a log monitoring module 207, a search creator module 208, and a graphical visualization module 209. The microservices builder module 206 may train and build edge computing microservices modules 305 to be installed on a respective vehicle data gateway 112 for edge computing of the vehicle data, as further detailed below.

Log monitoring module 207 may collect, parse, and store the vehicle data received from the vehicle data gateway 112 of each of the plurality of vehicles 110. Log monitoring module 207 may also collect, parse, and store data logs and events created by log agent 113 from the vehicle data gateway 112 of each of the plurality of vehicles 110. Log monitoring module 207 may include a processing tool, such as Logstash. As such, the log monitoring module 207 may collect vehicle data from various vehicles 110 that may each use different protocols and file formats. The log monitoring module 207 may parse and transform the vehicle data, data logs, and events into a common format. The vehicle data and the data logs and events may be stored in the one or more databases 107 of ground data center 105.

The search creator module 208 may receive the vehicle data in the common format from the log monitoring module 207. The search creator module 208 may generate searchable fields of the vehicle data so that the vehicle data is searchable by an end user via the web platform. As such, the search creator module 208 may provide a multitenant-capable full-text search engine with an HTTP web interface (e.g., via the web platform).

The graphical visualization module 209 may also receive the vehicle data in the common format from the log monitoring module 207. The graphical visualization module 209 may generate graphical visualizations of the vehicle data for each of the plurality of vehicles 110. For example, the graphical visualization module 209 may create bar, line, and scatter plots, or pie charts and maps of the vehicle data for a respective vehicle and/or multiple vehicles of the plurality of vehicles 110. The graphical visualization module 209 may be displayed with an HTTP web interface (e.g., via the web platform).

The vehicle data may be transmitted from the server systems 106 to an end user via the web platform. The end users may access the vehicle data through the web platform on a user device 115. End users may select vehicle data of one or more of the plurality of vehicles 110 to view on the web platform and the select vehicle data may be transmitted to the end user via the web platform through network 120. The select vehicle data may be displayed on the user device 115 via the web platform.

The web platform may include services for collecting, monitoring, and analyzing vehicle data of the plurality of vehicles 110. The services may include, for example, performance monitoring, control monitoring, maintenance monitoring, and/or visual monitoring and alerting. For example, the end user may search the select vehicle data via the searchable data created by the search creator module 208. Further, the end user may view graphical visualizations of the select vehicle data created by the graphical visualization module 209. The end user may also view the data logs and events collected and stored by the log monitoring module 207. As such, the performance, control, and maintenance of a vehicle or multiple vehicles of the plurality of vehicles 110 may be monitored by the end user via the web platform.

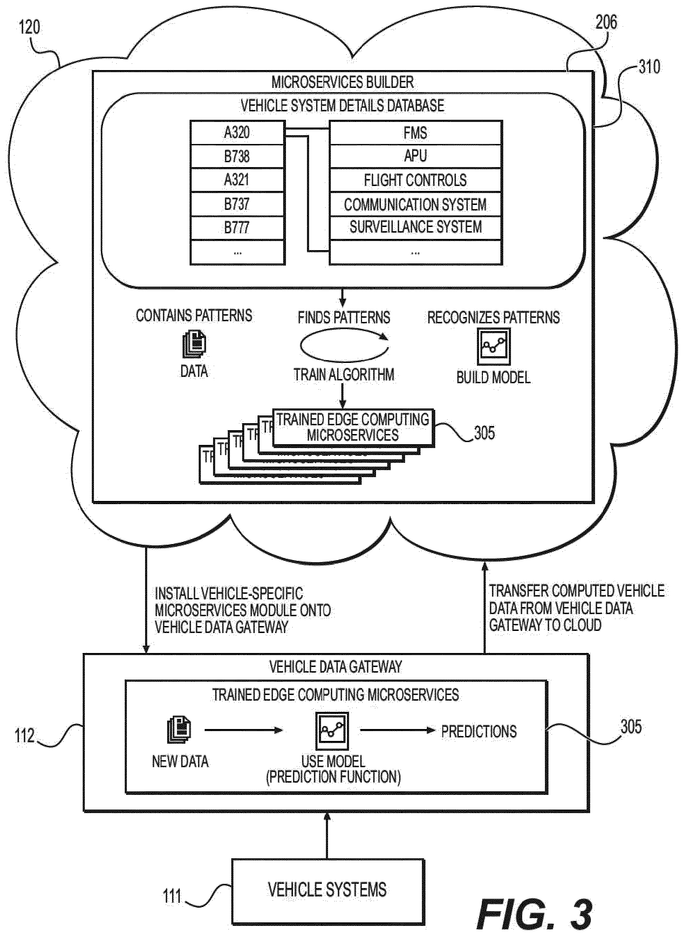

FIG. 3 depicts a block diagram of an exemplary microservices builder module 206 of system 100, according to aspects of the disclosure. As shown in FIG. 3, the microservices builder module 206 may be implemented by server systems 106 and reside in the cloud via network 120. The microservices builder module 206 may generate a plurality of edge computing microservices modules 305. As such, the microservices builder module 206 may access the one or more databases 107 via the network 120. The one or more databases 107 may include a vehicle system details database 310. The vehicle system details database 310 may store vehicle system details of various vehicles of the plurality of vehicles 110. The vehicle system details may include, for example, vehicle type and vehicle systems onboard the respective vehicle 110. In one embodiment, the plurality of vehicles 110 may include a plurality of aircraft and vehicle type may include aircraft type, such as A320, B737, A321, B738, B777, etc. Further, vehicle systems onboard the respective vehicle 110 may include various avionics systems onboard a respective aircraft. The vehicle systems may include, for example, FMS, APU, flight controls, communications systems, surveillance system, etc.

The microservices builder module 206 may communicate with the server systems 106 of the ground data center 106 through network 120 to access the vehicle system details database 310. The microservices builder module 206 may generate the plurality of edge computing microservices modules 305 by identifying patterns in the data of the vehicle system details of each of the plurality of vehicles 110 stored in the vehicle system details database 310. After identifying the patterns in the data, the microservices builder module 206 may use an algorithm to train and build an edge computing microservices module 305 for each of the plurality of vehicles 110 based on the identified patterns in the data. The edge computing microservices modules 305 may be installed on the vehicle data gateway 112 of a respective vehicle of the plurality of vehicles 110. As such, each vehicle of the plurality of vehicles 110 may receive a respective trained edge computing microservices module 305 based on the vehicle type and vehicle system details of the respective vehicle.

Once installed on the vehicle data gateway 112 of a respective vehicle, the edge computing microservices module 305 may perform edge computing of the vehicle data. For example, after the vehicle data gateway 112 has collected and stored vehicle data from the vehicle systems 111, the edge computing microservices module 305 may perform vehicle data computation of the vehicle data to generate computed vehicle data. The vehicle data gateway 112 may then send the computed vehicle data to the server systems 106 of ground data center 105 through network 120. Server systems 106 may receive the computed vehicle data of each of the plurality of vehicles 110 and store the computed vehicle data in the one or more databases 107. Installing edge computing microservices modules 305 in the vehicle data gateway 112 of each of the plurality of vehicles 110 may allow each vehicle data gateway 112 to perform edge computing of the vehicle data of a respective vehicle 110. As such, vehicle data computation may be decentralized. Thus, computational stress and data message exchange latency may be reduced and network traffic may be balanced, such that less bandwidth may be used in sending, receiving, and computing vehicle data of the plurality of vehicles 110.

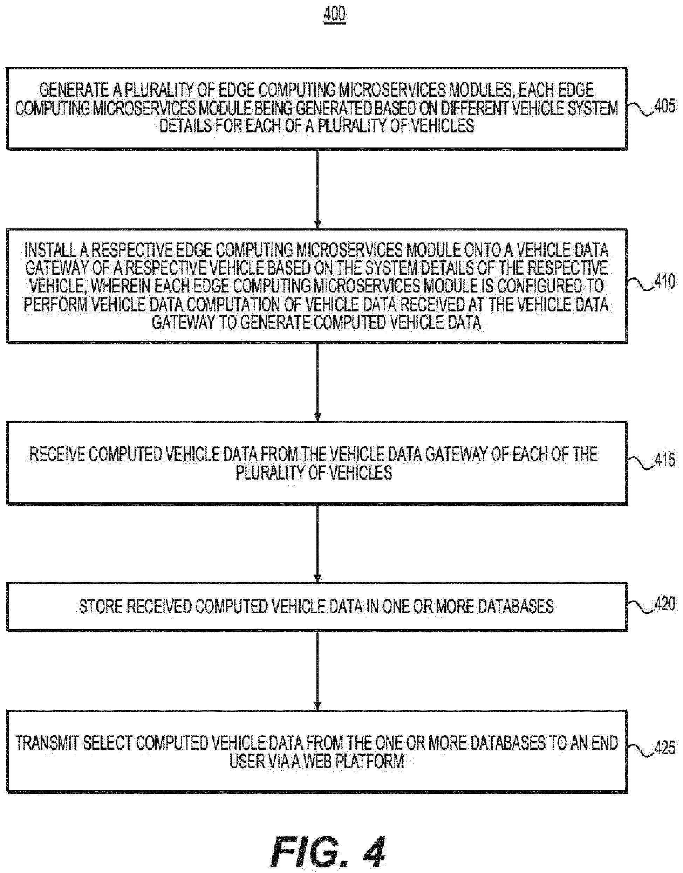

FIG. 4 depicts a flowchart of an exemplary process 400 for collecting, monitoring, and analyzing vehicle data from a plurality of vehicles 110 using edge computing, according to one or more embodiments, and may be performed in the exemplary environment of FIG. 1. In an initial step 405, the server systems 106, via microservices builder module 206, may generate a plurality of edge computing microservices modules 305. Each of the edge computing microservices modules 305 may be generated based on different vehicle system details for each of the plurality of vehicles 110. To generate the edge computing microservices modules 305, server systems 106 may identify patterns in system detail data of each of the plurality of vehicles 110. Based on the patterns, system servers 106 may train and build each of the plurality of edge computing microservices modules 305 for each of the plurality of vehicles 110.

In step 410, the server systems 106 may install a respective edge computing microservices module 305 onto a vehicle data gateway 112 of a respective vehicle 110 based on the vehicle system details of the respective vehicle 110. Each of the edge computing microservices modules 305 may be configured to perform vehicle data computation of vehicle data received at the vehicle data gateway 112 to generate computed vehicle data. The vehicle data gateway 112 of each of the plurality of vehicles 110 may be configured to receive vehicle data by one or more protocols from one or more vehicle systems 111. As such, each of the plurality of edge computing microservices modules 305 may be configured to interpret vehicle data received by each of the one or more protocols from the one or more vehicle systems 111.

In step 415, the server systems 106 may receive computed vehicle data from the vehicle data gateway 112 of each of the plurality of vehicles 110. The computed vehicle data of each of the plurality of vehicles 110 may be encoded by the edge computing microservices module 305 prior to being received by the server systems 106. After receiving the encoded computed vehicle data, server systems 106 may decode the computed vehicle data of each of the plurality of vehicles 110.

In step 420, the server systems 106 may store the computed vehicle data of each of the plurality of vehicles 110 in one or more databases 107. The server systems 106 may then generate searchable fields of the received computed vehicle data to generate searchable computed vehicle data for each of the plurality of vehicles 110. Server systems 106 may also generate graphical visualizations of the received computed vehicle data for each of the plurality of vehicles 110. Server systems 106 may further receive data logs and events from the vehicle data gateway 112 of each of the plurality of vehicles 110 and stored the received data logs and events in the one or more databases 107.

In step 425, the server systems 106 may transmit select computed vehicle data from the one or more databases 107 to an end user via the web platform. Server systems 106 may display, on a user device 115 through the web platform, at least one of select searchable computed vehicle data, select generated graphical visualizations of the received computed vehicle data, and/or select stored data logs and events for a select vehicle of the plurality of vehicles 110.

FIG. 5 depicts a high-level functional block diagram of an exemplary computer device or system, in which embodiments of the present disclosure, or portions thereof, may be implemented, e.g., as computer-readable code. For example, each of the exemplary systems, user interfaces and methods described above with respect to FIGS. 1-4 can be implemented in device 500 using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGS. 1-4.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments of the present disclosure, as described above in the examples of FIGS. 1-4 may be implemented using device 500. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

As shown in FIG. 5, device 500 may include a central processing unit (CPU) 520. CPU 520 may be any type of processor device including, for example, any type of special purpose or a general-purpose microprocessor device. As will be appreciated by persons skilled in the relevant art, CPU 520 also may be a single processor in a multi-core/multiprocessor system, such system operating alone, or in a cluster of computing devices operating in a cluster or server farm. CPU 520 may be connected to a data communication infrastructure 510, for example, a bus, message queue, network, or multi-core message-passing scheme.

Device 500 may also include a main memory 540, for example, random access memory (RAM), and may also include a secondary memory 530. Secondary memory 530, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 530 may include other similar means for allowing computer programs or other instructions to be loaded into device 500. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 500.

Device 500 may also include a communications interface ("COM") 560. Communications interface 560 allows software and data to be transferred between device 500 and external devices. Communications interface 560 may include a modem, a network interface (such as an Ethernet card), a communications port, a PCMCIA slot and card, or the like. Software and data transferred via communications interface 560 may be in the form of signals, which may be electronic, electromagnetic, optical, or other signals capable of being received by communications interface 560. These signals may be provided to communications interface 560 via a communications path of device 500, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 500 also may include input and output ports 550 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer-implemented method for collecting, monitoring, and analyzing vehicle data from a plurality of vehicles using edge computing, the method comprising:
generating a plurality of edge computing microservices modules, each edge computing microservices module being generated based on different vehicle system details for each of the plurality of vehicles;
installing a respective edge computing microservices module onto a vehicle data gateway of a respective vehicle based on the vehicle system details of the respective vehicle, wherein each edge computing microservices module is configured to perform vehicle data computation of vehicle data received at the vehicle data gateway of each of the plurality of vehicles to generate computed vehicle data;
receiving the computed vehicle data from the vehicle data gateway of each of the plurality of vehicles;
storing the received computed vehicle data in one or more databases; and
transmitting select computed vehicle data from the one or more databases to an end user via a web platform.

2. The method of claim 1, wherein generating a plurality of edge computing microservices modules includes identifying patterns in the vehicle system details of each of the plurality of vehicles; and
based on the patterns in the vehicle system details, training and building each of the plurality of edge computing microservices modules for each of the plurality of vehicles.

3. The method of claim 2, wherein the vehicle data gateway of each respective vehicle is configured to receive vehicle data by one or more protocols from one or more onboard vehicle systems.

4. The method of claim 3, wherein each of the plurality of edge computing microservices modules are further configured to interpret the vehicle data received by the one or more protocols from the one or more onboard vehicle systems.

5. The method of claim 1, wherein receiving computed vehicle data from the vehicle data gateway of each of the plurality of vehicles includes receiving encoded computed vehicle data from the vehicle data gateway of each of the plurality of vehicles.

6. The method of claim 5, further comprising:
decoding the encoded computed vehicle data received from each of the plurality of vehicles.

7. The method of claim 1, further comprising:
generating searchable fields of the received computed vehicle data to generate searchable computed vehicle data for each of the plurality of vehicles.

8. The method of claim 7, further comprising:
generating graphical visualizations of the received computed vehicle data for each of the plurality of vehicles.

9. The method of claim 8, further comprising:
receiving data logs and events from the vehicle data gateway of each of the plurality of vehicles; and
storing the received data logs and events in the one or more databases.

10. The method of claim 9, wherein transmitting select computed vehicle data from the one or more databases to the end user via the web platform includes:
displaying, via the web platform, at least one of: select searchable computed vehicle data, select generated graphical visualizations of the received computed vehicle data, or select stored data logs and events.
